(19) Europäisches Patentamt
European Patent Office
Office européen des brevets

(11) **EP 2 028 465 A1**

(12) **EUROPEAN PATENT APPLICATION**

(43) Date of publication:
**25.02.2009 Bulletin 2009/09**

(51) Int Cl.:
***G01K 7/01*** *(2006.01)*

(21) Application number: **07253276.5**

(22) Date of filing: **20.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **WINBOND ELECTRONICS CORPORATION**
**Hsinchu (TW)**

(72) Inventor: **Lin, Wen-Sheng**
**Science-Based Industrial Park**
**Hsinchu (TW)**

(74) Representative: **Johnson, Terence Leslie**
**Marks & Clerk**
**90 Long Acre**
**London**
**WC2E 9RA (GB)**

(54) **Transistor circuit with estimating parameter error and temperature sensing apparatus using the same**

(57) A transistor circuit (210) with estimating parameter error and temperature sensing apparatus (240) using the same are provided. The temperature sensing apparatus measures and calculates a parameter error of transistor (Q1) which is driven by different currents in advance. And the temperature sensing apparatus compensates an error occurred during temperature measurement using the acquired the parameter error so as to obtain an accurate environment temperature.

FIG. 2

EP 2 028 465 A1

**Description**

BACKGROUND OF THE INVENTION

Field of Invention

The present invention relates to a temperature sensing apparatus, and more specifically, relates to a temperature sensing apparatus for sensing the temperature by measuring the voltage difference of the base and the emitter of a transistor.

Description of Related Art

Since there are two pn junctions in the physical structure of a BJT (bipolar transistor), and because of the characteristic of the pn junction, therefore in the case of forward bias, the voltage difference of the base and the emitter may vary with the temperature, the formula thereof is:

$$Vbe=KT/q*\ln(Ic/Is)\ldots\ldots\ldots\ldots\ldots\ldots\ldots\ldots\ldots(1).$$

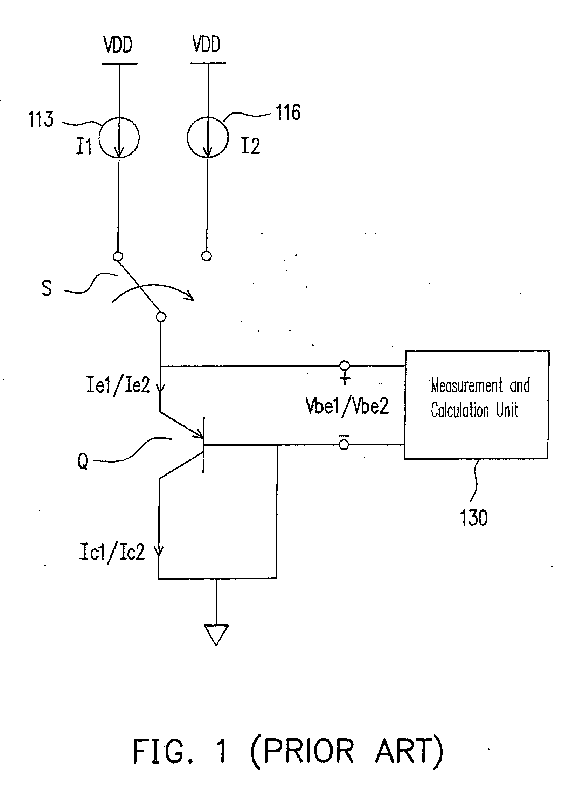

In the above formula (1), Vbe is base-emitter voltage, K is Boltzman's constant, T is environment temperature, and the unit thereof is Kelvin temperature, q is electron charge, Ic is collector current, Is is saturation current.
In the current prior art, there already is a temperature sensing apparatus which measures temperature using the characteristic that the voltage difference of the base and the emitter of BJT varies with temperature.Fig.1 is a schematic circuit block diagram of a temperature sensing apparatus in the prior art. When switch S is switched to the left side, current I1 is introduced to the emitter of a transistor Q to drive the transistor Q to generate a collector current Ic1 and a base-emitter voltage Vbe1.It can be learnt from the above formula (1), at this moment, the voltage difference of the base and the emitter Vbe1 measured by a measurement and calculation unit 130 is:

$$Vbe1=KT/q*\ln(Ic1/Is)\ldots\ldots\ldots\ldots\ldots\ldots\ldots\ldots\ldots(2).$$

It can be known from the transistor current gain, at this moment, the proportion relation between the collector current Ic1 and the emitter current Ie1 is Ic1=($\beta$1/$\beta$1 + 1). Ie1. Wherein the emitter current Ie1 is the current I1 output by a current source 113, therefore the above formula (2) can be written as:

$$Vbe1=KT/q*\ln[\frac{\beta1}{\beta1+1}\cdot\frac{I1}{Is}]\ldots\ldots\ldots\ldots\ldots\ldots\ldots\ldots(3)$$

, in the above formula (3), $\beta$1 is the current gain of the transistor of the moment.
On the contrary, when the switch S is switched to the right side, current I2 is introduced to the emitter of the transistor Q to drive the transistor Q to generate a collector current Ic2 and a base-emitter voltage Vbe2. At this moment, the voltage difference of the base and the emitter Vbe2 measured by the measurement calculation unit 130 is:

$$Vbe2=KT/q*\ln[\frac{\beta2}{\beta2+1}\cdot\frac{I2}{Is}]\ldots\ldots\ldots\ldots\ldots\ldots\ldots\ldots(4)$$

, in the above formula (4), $\beta$ 2 is the current gain of the transistor of the moment.
Next, the measured differential value ΔVbe between Vbe1 and Vbe2 will be calculated by the measurement calculation unit 130. And it can be known from the above formula (3), (4),

$$\Delta Vbe = Vbe2 - Vbe1 = KT/q* \ln\left(\frac{I2}{I1} \cdot \frac{\beta2}{\beta1} \frac{\beta1+1}{\beta2+1}\right) \ldots\ldots\ldots(5).$$

In the prior art, when calculating the differential value ΔVbe between Vbe2 and Vbe1, usually the difference between the current gain P 1 and P 2 may be ignored, that is, assumed the current gain β1 = β2 , therefore the above formula (5) can be written as:

$$\Delta Vbe = Vbe2 - Vbe1 = KT/q*\left(\frac{I2}{I1}\right) \ldots\ldots\ldots\ldots\ldots\ldots\ldots(6).$$

In the above formula (6), since K, q are constants, and I1 and I2 are input currents, therefore the differential value ΔVbe is only relevant to the environment temperature T, i.e. the environment temperature T can be acquired via measuring the differential value ΔVbe of the voltage difference of the base and the emitters.

Although the above temperature sensing apparatuses all assumed that the current gain β1 and β2 are the same, but in practical applications, since the same transistor may operates under different drive currents, as a result, the current gain may have slight difference. Therefore when the voltage difference of the base and the emitter Vbe1 and Vbe2 in Fig.1 are measured, the current gain β1 and β2 of the transistor Q are different, this results in errors in temperature measurement.

SUMMARY OF THE INVENTION

The present invention provides a temperature sensing apparatus for improving the accuracy of temperature measurement and reduce occurrence of the parameter error of a transistor.

The present invention provides a transistor circuit for estimating parameter error of an element to determine the parameter error of an element under different drive currents.

The present invention provides a temperature sensing apparatus including a current generation unit, a first transistor, a parameter error estimation unit and a first measurement and calculation unit. Wherein, the current generation unit generates a first current, a second current, a third current and a fourth current according to a control signal. The first transistor is coupled to the current generation unit, and receives the first current and the second current to drive the first transistor to generate a first base current and a second base current. The parameter error estimation unit is coupled to the current generation unit and the first transistor, and receives the third current and the fourth current, the first base current and the second base current, and determines a parameter error of the first transistor according to the differential between third current and the first base current and the differential between the fourth current and the second base current. The first measurement and calculation unit is coupled to the parameter error estimation unit and the first transistor. When the first current drives the first transistor, the voltage difference of the base and the emitter of the first transistor is measured as a first voltage; and when the second current drives the first transistor, the voltage difference of the base and the emitter of the first transistor is measured as a second voltage. The differential between the first voltage and the second voltage is calculated, and the environment temperature is produced via calculation according to the voltage difference and the parameter difference.

The present invention also provides a transistor circuit for element parameter error estimation, a current generation unit, a first transistor and a parameter error estimation unit. Wherein, the current generation unit generates a first current, a second current, a third current and a fourth current according to a control signal. The first transistor is coupled to the current generation unit, and receives the first current and the second current to drive the first transistor to generate a first base current and a second base current. The parameter error estimation unit is coupled to the current generation unit and the first transistor, and receives the third current and the fourth current, the first base current and the second base current, and determines a parameter error of the first transistor according the difference between third current and the first base current and the difference between the fourth current and the second base current.

According to an embodiment of the present invention, the element parameter errors of a transistor under different currents are estimated, and the error due to the element parameter bias of the transistor during the measurement of the temperature is eliminated to increase the accuracy of temperature measurement.

In order to the make the aforementioned and other objects, features and advantages of the present invention comprehensible, a preferred embodiment accompanied with figures is described in detail below.

BRIEF DESCRIPTION OF THE DRAWINGS

Fig.1 is a schematic circuit block diagram of a conventional temperature sensing apparatus;

Fig.2 is a schematic circuit block diagram of a temperature sensing apparatus according to an embodiment of the present invention; and

Fig.3 is a schematic circuit block diagram of a temperature sensing apparatus according to another embodiment of the present invention.

DESCRIPTION OF EMBODIMENTS

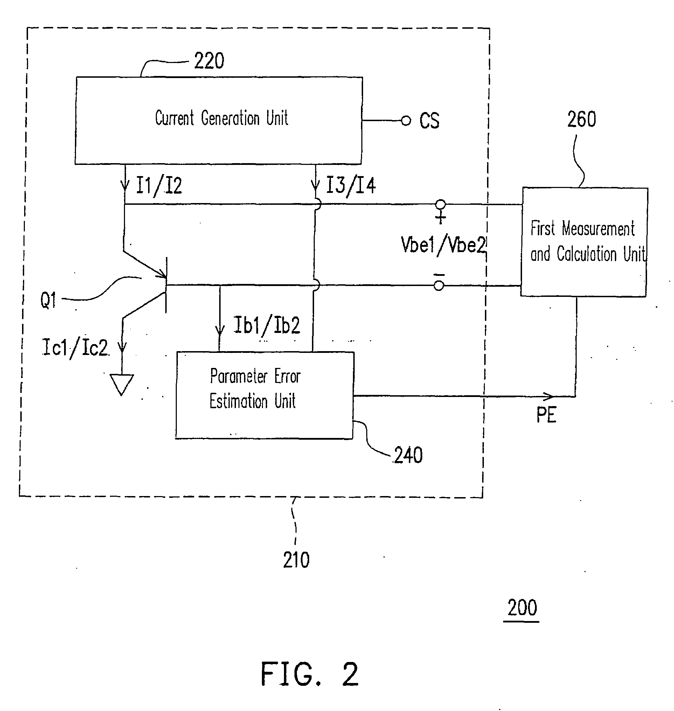

Fig.2 is a schematic circuit block diagram of a temperature sensing apparatus according to an embodiment of the present invention. Referring to Fig. 2, the temperature sensing circuit 200 includes a transistor circuit 210 and a first measurement and calculation unit 260. The transistor circuit 210 may be employed to estimate the parameter change of a transistor element, based on which, and output a parameter error PE to the first measurement and calculation unit 260. The transistor circuit 210 includes the current generation unit 220, the first transistor Q1 and the parameter error estimation unit 240. For the purpose of describing an embodiment of the present invention, PNP transistors are used as an example for all the first transistors Q1. However, the first transistor Q1 may also be implemented with NPN transistors. Next, the operations of respective circuit blocks in Fig. 2 will be described.

The current generation unit 220 generates the first current I1, the second current I2, the third current I3 and the fourth current I4, and the current generation unit 220 receives a control signal CS input and determines the output sequence of the currents I1~I4 according to the control signal CS. In the present embodiment, the current I1 and I2 for example are input to the emitter of the transistor Q1. When the emitter of the first transistor Q1 receives the first current I1 (i.e. when the first current I1 is used as the emitter current), the base thereof will be driven to generate the first base current Ib1. When the emitter of the first transistor Q1 receives the second current I2 (i.e. when the second current I2 is used as the emitter current), the base thereof will be driven to generate the second base current Ib2.

The parameter error estimation unit 240 is coupled to the current generation unit 220 and the first transistor Q1, and receives the third current I3, the fourth current I4, the first base current Ib1 and the second base current Ib2. The parameter error estimation unit 240 calculates the differential value between the third current I3 and the first base current Ib1 and the differential value between the fourth current I4 and the second base current Ib2, and the two calculated differential values are used to calculate a parameter error PE and input to the first measurement and calculation unit 260. In the present embodiment, the parameter error PE indicates the error due to the characteristic of a transistor element under different operation environment, for example, the current gain error, saturation current or threshold voltage, etc. For the purpose of describing an embodiment of the present invention, the current gain error of the transistor is used as an example for the parameter errors PE, however such assumption is not intended to limit the scope of the present invention as such.

In addition, it is assumed that the current I1 and I3 generated by the current generation unit 220 are in a certain proportion, and the current I2 and I4 are also in a certain proportion. The control signal CS controls the current generation unit 220 to output current I1 and I3 during a first time period T1, and output current I2 and I4 during a second time period T2. Therefore, during the first time period T1, the current that the parameter error estimation unit 240 receives is current I3 and the first base current Ib1 output by the transistor Q1. At this moment, the parameter error estimation unit 240 calculates the differential value between the current I3 and the first base current Ib1. The differential value has a certain proportion with the collector current Ic1 of the transistor at this time. During the second time period T2, the current that the parameter error estimation unit 240 receives is current I4 and the first base current Ib2 output by the transistor Q1. At this moment, the parameter error estimation unit 240 calculates the differential value between the current I4 and the first base current Ib3. The differential value has a certain proportion with the collector current Ic2 of the transistor at this time.

It can be known from the above operation that during the first time period T1, the parameter error estimation unit 240 obtains the differential value between the third current I3 and the first base current Ib1. Thus, a current that has a certain proportion with the collector current of the first transistor Q1 at this time is obtained. In the meantime, during the first time period T1, the parameter error estimation unit 240 receives a current I3 having a certain proportion with the emitter current of the first transistor Q1 at this time. Therefore during the first time period T1, the parameter error estimation unit 240 may calculate the above two equivalent currents (i.e. the current that has a certain proportion with the collector current of the first transistor Q1 of the moment and the current that has a certain proportion with the emitter current of the moment) to get the element parameter of the first transistor Q1 of the moment. Similarly, during the first time period T1, the parameter error estimation unit 240 obtains the element parameter of the first transistor Q1 of the moment. Next, the parameter error estimation unit 240 obtains the parameter error PE of the first transistor through the element parameter acquired through these two time periods T1 and T2.

In other words, the parameter error estimation unit 240 uses the above two differential values and current I3 and I4 to determine the current gain change ($\beta1$ and $\beta2$) of the transistor Q1 operated under different drive currents (I1 and I2), thus the parameter error PE is acquired. Wherein the $\beta1$ is the current gain when the transistor Q1 is driven by the current I1, while the $\beta2$ is the current gain when the transistor Q1 is driven by the current I2.

The first measurement and calculation unit 260 in Fig. 2 is coupled to the parameter error estimation unit 240 and the transistor Q1 to receive the parameter error PE and to measure the voltage difference of the base and the emitter of the transistor Q1. During the above first time period, the current I1 drives the transistor Q1, while the voltage difference of the base and the emitter that the first measurement and calculation unit 260 measures will be a first voltage which is expressed as Vbe1. At this time, the value of the voltage difference of the base and the emitter Vbe1, for example, may be expressed by the equation (3) in the prior art. During the above second time period, the current I2 drives the transistor Q1, while the voltage difference of the base and the emitter that the first measurement and calculation unit 260 measures as a second voltage is expressed as Vbe2. At this time, the value of the voltage difference of the base and the emitter Vbe2, for example, may be expressed by the equation (4) in the prior art. The first measurement and calculation unit 260 calculates the differential value ΔVbe which is the difference between Vbe1 and Vbe2, and the value of ΔVbe, for example, may be expressed by the equation (5) in the prior art.

In the present embodiment, since the first measurement and calculation unit 260 has obtained a parameter error PE, therefore when the first measurement and calculation unit 260 calculates an environment temperature T, this parameter error PE may be used to eliminate the error between the current gain $\beta1$ and P 2 , so that in the equation (5), the environment T only has linear correlation with the ratio of the input currents I1 and I2. Therefore the first measurement and calculation unit 260 can obtain an accurate environment temperature T and can avoid ignoring the error between the current gain $\beta1$ and $\beta2$, so that the accuracy of temperature measurement can be increased. An embodiment of an apparatus is further provided, so that those skilled in the art can implement the present invention by referring to the description of the present embodiment.

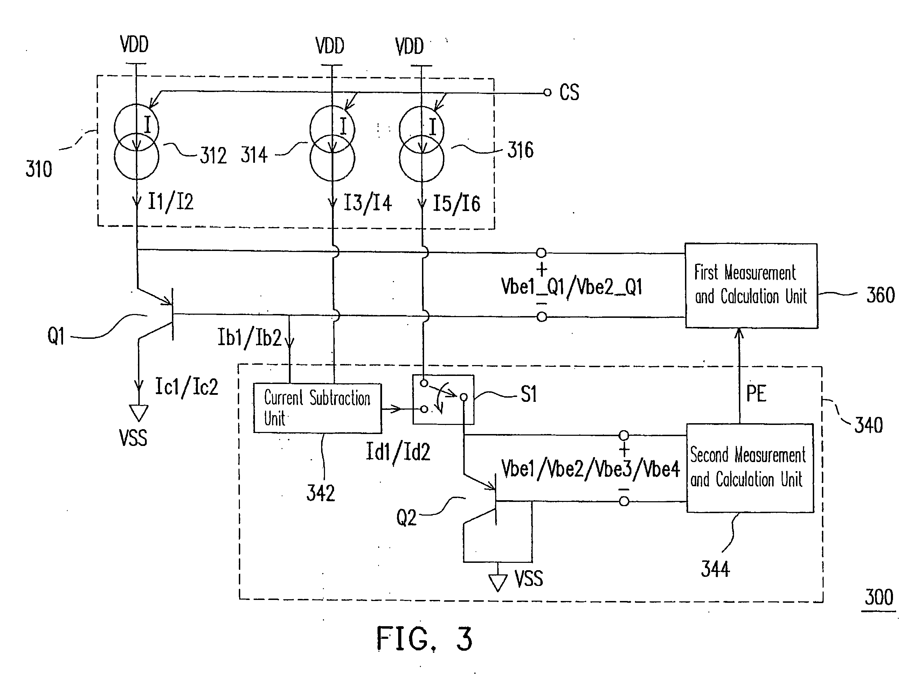

Fig. 3 is a schematic circuit block diagram of a temperature sensing apparatus according to another embodiment of the present invention. For the purpose of describing an embodiment of the present invention, it is assumed that the parameter error PE is the error of the current gain of a transistor, while the parameter error PE may also be saturation current or threshold voltage, etc. In addition, a PNP transistor is used as the example of the first transistor Q1 and the second transistor Q2 in the present embodiment, however, the transistors Q1 an Q2 may also be implemented with NPN transistor or other types of transistors.

The current generation unit 310 in Fig. 3 includes a first controlled current source 312, a second controlled current source 314 and a third controlled current source 316. Wherein the first controlled current source 312 has a first end, a second end and a control end, and the first end thereof is coupled to a first reference voltage VDD. And the control end of the first controlled current source 312 receives a control signal CS, and determines the time when the second end thereof outputs the first current I1 and the second current I2 according to the control signal CS. The second controlled current source 314 has a first end, a second end and a control end, and the first end thereof is coupled to a first reference voltage VDD. The control end of the second controlled current source 314 receives a control signal CS, and determines the time when the second end thereof outputs the third current I3 and the fourth current I4 according to the control signal CS. The third controlled current source 316 has a first end, a second end and a control end, and the first end thereof is coupled to a first reference voltage VDD. And the control end of the third controlled current source 316 receives a control signal CS, and determines the time when the second end thereof outputs the fifth current 15 and the sixth current I6 according to the control signal CS.

The emitter of the transistor Q1 in Fig.3 is coupled to the controlled current source 312, and the collector thereof is coupled to the second reference voltage (for example, ground voltage VSS). The first measurement and calculation unit 360 is coupled to the base and the emitter of the transistor Q1, and measures the voltage difference of the base and the emitter of the transistor Q1.

A current subtraction unit 342 in the parameter error estimation unit 340 is coupled to the base of the transistor Q1, the controlled current source 314 and a switching unit S1, and the current subtraction unit 342 subtracts the current from the base of the transistor Q1 from the current of the controlled current source 314 and then outputs to the switching unit S1. The switching unit S 1 in the parameter error estimation unit 340 is coupled to the controlled current source 316, the current subtraction unit 342 and the emitter of the transistor Q2. The switching unit S1 is used to select coupling of the emitter of the transistor Q2 to the controlled current source 316 or to the current subtraction unit 342. The second measurement and calculation unit 344 in the parameter error estimation unit 340 is coupled to the base and emitter of the transistor Q2, and the voltage difference of the base and the emitter of the transistor Q2 is measured.

In the present embodiment, the strengths of the above currents I1, I3 and 15 have a proportional relationship which can be expressed as $I1=A\times I3=B\times I5$. In addition, the strengths of currents I2, I4 and I6 also have a proportional relationship which can be expressed as I2=C×I4=D×I6, wherein A, B, C and D are real numbers. For the purpose of describing the present embodiment, it is assumed that value of A, B, C and D is 1, however it is not intended to limit the present invention as such. In addition, for the purpose of describing the present embodiment, three time periods are pre-defined below, which respectively are a first estimating period Te1, a second estimating period Te2 and a temperature measurement period Tm.

During the first estimating period Te1, the control signal CS controls the controlled current source 316 to sequentially output the currents I5 and I6. During the first estimating period Te1, a selecting unit S1 also couples the emitter of the transistor Q2 to the controlled current source 316, so that the currents I5 and I6 drive the transistor Q2. When the current I5 drives the transistor Q2, the voltage difference of the base and the emitter that the second measuring unit 344 measures is a first measurement voltage which is expressed as Vbe1. When the current I6 drives the transistor Q2, the voltage difference of the base and the emitter that the second measuring unit 344 measures is a second measurement voltage which is expressed as Vbe2. In addition, during the first estimating period Te1, the second measuring unit 344 calculates the differential value which is expressed as ΔVbe(Te1) between Vbe1 and Vbe2. In the present embodiment, since the transistor Q2 is not used as the transistor for measuring temperature, therefore circuit designer may use self-compensation method to maintain the current gain of the transistor Q2 at a fixed value under different drive currents. In addition, I1=I5, currents I2=I6, therefore the value of difference □Vbe(Te1) between Vbe1 and Vbe2 is:

$$\Delta Vbe(Te1) = Vbe2 - Vbe1 = KT_{Q2}/q * \left( \frac{I6}{I5} \right)$$

$$= KT_{Q2}/q * \left( \frac{I2}{I1} \right) \ldots\ldots\ldots\ldots\ldots\ldots\ldots\ldots (7).$$

In the above equation (7), $T_{Q2}$ is the operation temperature of the transistor Q2.

During the second estimating period Te2, the control signal CS controls the controlled current sources 312 and 314 to output the currents I1, I2, I3 and I4. When the control signal CS controls the controlled current source 312 to output the current I1, the controlled current source 314 is also controlled to output the current I3. In addition, when the controlled current source 312 outputs the current I2, the controlled current source 314 outputs the current I4. Therefore, when the controlled current sources 312 and 314 respectively output the currents I1 and I3, the base of the transistor Q1 outputs the first base current Ib1 to the current subtraction unit 342. In the meantime, the current subtraction unit 342 subtracts the current I3 and the first base current Ib1, and then outputs a first differential current Id1. In addition, when the controlled current sources 312 and 314 respectively output the current I2 and I4, the base of the transistor Q1 outputs the second base current Ib2 to the current subtraction unit 342. In the meantime, the current subtraction unit 342 subtracts the received current I4 and the second base current Ib2 and then outputs a second differential current Id2.I1=I3, current I2=I4, and the current I1 and I2 both are sequentially used as the emitter current of the transistor Q1, therefore the currents Id1 and Id2 are expressed as below:

$$Id1 = I3 - Ib1 = I1 - Ib1 = Ic1 \ldots\ldots\ldots\ldots\ldots\ldots\ldots\ldots (8),$$

$$Id2 = I4 - Ib2 = I2 - Ib2 = Ic2 \ldots\ldots\ldots\ldots\ldots\ldots\ldots\ldots (9).$$

In the above equations (8) and (9), Ic1 an Ic2 respectively are the collector currents when the transistor is driven by the currents I1 and I2.

During the second estimating period Te2, the selecting unit S 1 also couples the emitter of the transistor Q2 to the current subtraction unit 342, so that the currents Id1 and Id2 drive the transistor Q2. When the current Id1 drives the transistor Q2, the voltage difference of the base and the emitter that the second measuring unit 344 measures is a third measurement voltage which may be expressed as Vbe3. When the current Id2 drives the transistor Q2, the voltage difference of the base and the emitter that the second measuring unit 344 measures is used as a fourth measurement voltage which may be expressed as Vbe4. At this moment, the second measuring unit 344 calculates the differential value between Vbe3 and Vbe4, which is expressed as ΔVbe(Te2). Similar to the first estimating period Te1, during the second estimating period Te2, the current gain change of the transistor Q2 can be ignored. The value of differential ΔVbe(Te2) of the voltages Vbe4 and Vbe3 are respectively expressed as below:

$$\Delta Vbe(Te2)=Vbe4-Vbe3=KT_{Q2}/q*\left(\frac{Id2}{Id1}\right) \ldots\ldots\ldots\ldots (10).$$

The values of the currents Id1 and Id2 in the above formulas (8) and (9) are substituted into the above equation (10), the value of ΔVbe(Te2) is:

$$\Delta Vbe(Te2)=Vbe4-Vbe3=KT_{Q2}/q*\left(\frac{Ic2}{Ic1}\right) \ldots\ldots\ldots\ldots (11).$$

In addition, it can be learnt from the relation between the currents of collector and emitter of the transistor Q1, when the transistor Q1 is driven by current I1, the relationship between the currents I1 and Ic1 is: Ic1=[β1/(β1+1)]×I1. When the transistor Q1 is driven by current I2, the relationship between the currents I2 and Ic2 is: Ic2=[β2/(β2+1)]×I2. Wherein the β1 is the current gain when the transistor Q1 is driven by the current I1, while the β2 is the current gain when the transistor Q1 is driven by the current I2. Therefore the above formula (11) can be written as:

$$\Delta Vbe(Te2)=KT/q*\left(\frac{Ic2}{Ic1}\right)=KT_{Q2}/q*\left(\frac{I2}{I1}\cdot\frac{\beta 2}{\beta 1}\cdot\frac{\beta 1+1}{\beta 2+1}\right)...(12).$$

After the second measurement and calculation unit 344 acquired ΔVbe(Te1) and ΔVbe(Te2), then ΔVbe(Te1) and ΔVbe(Te2) are used to calculate the parameter error PE which is then output to the first measurement and calculation unit 360. In the present embodiment, the parameter error PE may be obtained for example using the ratio of ΔVbe(Te1) and ΔVbe(Te2), and it can be known from the above equations (7) and (12) that the value of the parameter error PE is:

$$PE=\frac{\Delta Vbe(Te1)}{\Delta Vbe(Te2)}=\frac{\dfrac{KT_{Q2}}{q}\ln(\dfrac{I2}{I1})}{\dfrac{KT_{Q2}}{q}\ln(\dfrac{Ic2}{Ic1})}=\frac{\ln(\dfrac{I2}{I1})}{\ln(\dfrac{I2}{I1}\cdot\dfrac{\beta 2}{\beta 1}\cdot\dfrac{\beta 1+1}{\beta 2+1})} ...(13).$$

Finally, during the measuring period Tm, the environment temperature is calculated using the voltage difference of the base and the emitter of the transistor Q1. At this moment, the control signal CS controls the controlled current source 312 to sequentially output the currents I1 and I2 to the emitter of the transistor Q1. When the emitter of the transistor Q1 receives the current I1, the transistor Q1 generates the collector current Ic1, and the first measurement and calculation unit 360 measures the voltage difference of the base and the emitter, which is written as Vbe1_Q1. When the emitter of the transistor Q1 receives the current I2, the transistor Q1 generates the collector current Ic2, and the first measurement and calculation unit 360 measures the voltage difference of the base and the emitter of the transistor Q1, which is written as Vbe2_Q1. The first measurement and calculation unit 360 calculates the differential value between the measured voltages Vbe1-Q1 and Vbe2_Q1, which is expressed as ΔVbe(Tm), the value thereof is:

$$\Delta Vbe(Tm)=Vbe2\_Q1-Vbe1\_Q1$$

$$=KT_{Q1}/q* \ln\left(\frac{Ic2}{Ic1}\right)$$

$$=KT_{Q1}/q* \ln\left(\frac{I2}{I1}\cdot\frac{\beta2}{\beta1}\frac{\beta1+1}{\beta2+1}\right)\dots\dots\dots\dots(14).$$

If the first measurement and calculation unit 360 acquires the environment temperature T (for example $T_{Q1}$) using the calculated voltage differential $\Delta Vbe(Tm)$, as it can be found from the above equation (14) taht besides being relevant with the voltage differential $\Delta(Tm)$, the $T_{Q1}$ is also relevant to the current gain of the transistor Q1. Therefore, in the present embodiment, the first measurement and calculation unit 360 uses the received parameter error PE to compensate the above voltage differential $\Delta Vbe(Tm)$. In practical practice, for example, the voltage differential $\Delta Vbe$ (Tm) may be multiplied by the parameter error to obtain the compensated voltage difference which is expressed as $\Delta Vbe\_CT$, and the value of $\Delta Vbe\_CT$ is:

$$\Delta Vbe\_CT=\Delta Vbe(Tm)\times PE$$

$$=\frac{KT_{Q1}}{q}\ln\left(\frac{I2}{I1}\cdot\frac{\beta2}{\beta1}\frac{\beta1+1}{\beta2+1}\right)\times\frac{\ln(\frac{I2}{I1})}{\ln(\frac{I2}{I1}\cdot\frac{\beta2}{\beta1}\cdot\frac{\beta1+1}{\beta2+1})}$$

$$=\frac{KT_{Q1}}{q}\ln\left(\frac{I2}{I1}\right)\dots\dots\dots\dots\dots\dots\dots(15).$$

It can be known from the above formula (15), the compensated voltage difference $\Delta Vbe\_CT$ shows linear correlation with temperature. That is, after the first measurement calculation unit obtains the voltage difference $\Delta Vbe\_CT$, the temperature $T_{Q1}$ can be obtained through the voltage difference $\Delta Vbe\_CT$, therefore the temperature sensing apparatus 300 is able to measure an accurate environment temperature.

Those skilled in the art would understand that in the present embodiment, the first estimating period Te1, the second estimating period Te2 and the measuring period Tm do not have any priority order of execution. As long as the parameter error PE obtained during the first estimating period Te1 and the second estimating period Te2 is used to compensate the voltage difference $\Delta Vbe(Tm)$ to acquire an accurate environment temperature T, it has conformed to the spirit of the present invention.

To sum up, the present invention estimates the parameter error of transistor element under different driving currents, and eliminates the errors due to the transistor element parameter bias during the measurement of the temperature to increase the accuracy of temperature measurement.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

**Claims**

1. A temperature sensing apparatus, comprising:

   a current generation unit, for generating a first current, a second current, a third current and a fourth current according to a control signal;

   a first transistor, coupled to the current generation unit, for receiving the first current and the second current to generate a first base current and a second base current;

   a parameter error estimation unit, coupled to the current generation unit and the first transistor to receive the third current and the fourth current, the first base current and the second base current, for obtaining a parameter error of the first transistor according the differential value between third current and the first base current and the differential value between the fourth current and the second base current;

   a first measurement and calculation unit, coupled to the parameter error estimation unit and the first transistor, for measuring the voltage difference of the base and the emitter of the first transistor as a first voltage when the first current drives the first transistor, for measuring the voltage difference of the base and the emitter of the first transistor as a second voltage when the second current drives the first transistor to calculate an voltage differential value between the first voltage and the second voltage and calculate an environment temperature according to the voltage differential value and the parameter error.

2. The temperature sensing apparatus of claim 1, wherein the current generation unit comprises:

   a first controlled current source, comprising a first end, a second end and a control end, wherein the first end is coupled to a first reference voltage, the control end receives the control signal, and the second end outputs the first current and the second current according to the control signal; and

   a second controlled current source, comprising a first end, a second end and a control end, wherein the first end is coupled to the first reference voltage, the control end receives the control signal, and the second end outputs the third current and the fourth current according to the control signal.

3. The temperature sensing apparatus of claim 1 or claim 2, wherein the current generation unit further comprises:

   a third controlled current source, comprising a first end, a second end and a control end, wherein the first end is coupled to the first reference voltage, the control end receives the control signal, and the second end outputs a fifth current and a sixth current according to the control signal.

4. The temperature sensing apparatus of claim 3, wherein the parameter error estimation unit further receives the fifth current and the sixth current, and the parameter error estimation unit comprises:

   a current subtraction unit, for outputting a first differential current between the first base current and the third current, and a second differential current between the second base current and the fourth current;

   a second transistor; and

   a switching unit, for selecting the emitter of the second transistor being coupled to the current generation unit or the current subtraction unit.

5. The temperature sensing apparatus of claim 4, wherein the parameter error estimation unit further comprises:

   a second measurement and calculation unit, coupled to the second transistor and the first measurement and calculation unit, for measuring the voltage difference of the base and the emitter of the second transistor and calculating the parameter error,

   wherein, during a first estimating period, the switching unit couples the emitter of the second transistor to the current generation unit to receive the fifth current and the sixth current; during the first estimating period, when the fifth current drives the second transistor, the second measurement and calculation unit measures the voltage difference of the base and the emitter of the second transistor as a first measurement voltage; during the first estimating period, when the sixth current drives the second transistor, the second measurement and calculation unit measures the voltage difference of the base and the emitter of the second transistor as a second measurement voltage, and calculates a first voltage differential value between the first measurement voltage and the second measurement voltage; during a second estimating period, the switching unit couples the emitter of the second transistor to the current subtraction unit to receive the first differential current and the second differential current; during the second estimating period, when the first differential current drives the second transistor, the second measurement and calculation unit measures the voltage difference of the base and the emitter of the second transistor as a third measurement voltage; during the second estimating period, when the second differential current drives the second transistor, the second measurement and calculation unit measures the voltage difference of the base and the emitter of the second transistor as a fourth measurement voltage, and calculates a second voltage differential value between the third measurement voltage and the fourth measurement voltage; the second measurement and calculation unit calculates the parameter error according to the ratio of the first voltage differential value and the second voltage differential value.

6. The temperature sensing apparatus of any preceding claim, wherein the parameter error is a current gain error of a transistor.

7. A transistor circuit for estimating parameter errors of an element, comprising:

   a current generation unit, for generating a first current, a second current, a third current and a fourth current according to a control signal;
   a first transistor, coupled to the current generation unit, for receiving the first current and the second current to generate a first base current and a second base current; and
   a parameter error estimation unit, coupled to the current generation unit and the first transistor to receive the third current, the fourth current, the first base current and the second base current, for obtaining a parameter error of the first transistor according the differential value between third current and the first base current and the differential value between the fourth current and the second base current.

8. The transistor circuit for estimating parameter errors of an element of claim 7, wherein the current generation unit comprises:

   a first controlled current source, comprising a first end, a second end and a control end, wherein the first end is coupled to a first reference voltage, the control end receives the control signal, and the second end outputs the first current and the second current according to the control signal; and
   a second controlled current source, comprising a first end, a second end and a control end, wherein the first end is coupled to the first reference voltage, the control end receives the control signal, and the second end outputs the third current and the fourth current according to the control signal.

9. The transistor circuit for estimating parameter errors of an element of claim 7 or claim 8, wherein the current generation unit further comprises:

   a third controlled current source, comprising a first end, a second end and a control end, wherein the first end is coupled to the first reference voltage, the control end receives the control signal, and the second end outputs a fifth current and a sixth current according to the control signal.

10. The transistor circuit for estimating parameter errors of an element of claim 9, wherein the parameter error estimation unit receives the fifth current and the sixth current, and the parameter error estimation unit comprises:

   a current subtraction unit, for outputting a first differential current between the first base current and the third current, and a second differential current between the second base current and the fourth current;
   a second transistor; and
   a switching unit, for selecting the emitter of the second transistor being coupled to the current generation unit or the current subtraction unit.

11. The transistor circuit for estimating parameter errors of an element of claim 10, wherein the parameter error estimation unit comprises:

   a second measurement and calculation unit, coupled to the second transistor and the first measurement and calculation unit, for measuring the voltage difference of the base and the emitter of the second transistor and calculating the parameter error,

wherein, during a first estimating period, the switching unit couples the emitter of the second transistor to the current generation unit to receive the fifth current and the sixth current; during the first estimating period, when the fifth current drives the second transistor, the second measurement and calculation unit measures the voltage difference of the base and the emitter of the second transistor as a first measurement voltage; during the first estimating period, when the sixth current drives the second transistor, the second measurement and calculation unit measures the voltage difference of the base and the emitter of the second transistor as a second measurement voltage, and calculates a first voltage differential value between the first measurement voltage and the second measurement voltage; during a second estimating period, the switching unit couples the emitter of the second transistor to the current subtraction unit to receive the first differential current and the second differential current; during the second estimating period, when the first differential current drives the second transistor, the second measurement and calculation unit measures the voltage difference of the base and the emitter of the second transistor as a third measurement voltage; during the second estimating period, when the second differential current drives the second transistor, the second measurement and calculation unit measures the voltage difference of the base and the emitter of the second transistor as a fourth measurement voltage, and calculates a second voltage differential value between the third measurement voltage and the fourth measurement voltage; the second measurement and calculation unit calculates the parameter error according to the ratio of the first voltage differential value and the second voltage differential value.

12. The transistor circuit for estimating parameter errors of an element of any of claims 7 to 11, wherein the parameter error is a current gain error of a transistor.

VDD        VDD

113        116

I1         I2

S

Ie1/Ie2

Q

Measurement and
Calculation Unit

Vbe1/Vbe2

130

Ic1/Ic2

FIG. 1 (PRIOR ART)

FIG. 2

FIG. 3

**European Patent Office**

**EUROPEAN SEARCH REPORT**

Application Number

EP 07 25 3276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 870 357 B1 (FALIK OHAD [IL]) 22 March 2005 (2005-03-22) * abstract; figure 4 * * column 2, line 44 - column 3, line 62 * * column 5, line 48 - column 9, line 60 * ----- | 1-12 | INV. G01K7/01 |
| Y | PERTIJS M A P ET AL: "Non-Idealities of temperature sensors using substrate pnp transistors" PROCEEDINGS OF IEEE SENSORS 2002. ORLANDO, FL, JUNE 12 - 14, 2002, IEEE INTERNATIONAL CONFERENCE ON SENSORS, NEW YORK, NY : IEEE, US, vol. VOL. 1 OF 2. CONF. 1, 12 June 2002 (2002-06-12), pages 1018-1023, XP010605250 ISBN: 0-7803-7454-1 * page 1018 - page 1021 * ----- | 1-12 | |
| Y | US 2006/222049 A1 (CAVE DAVID L [US]) 5 October 2006 (2006-10-05) * paragraph [0014] - paragraph [0032] * ----- | 1-12 | **TECHNICAL FIELDS SEARCHED (IPC)** G01K |
| A | US 6 008 685 A (KUNST DAVID J [US]) 28 December 1999 (1999-12-28) * column 1, line 15 - column 4, line 37 * ----- | 1-12 | |
| A | US 6 554 469 B1 (THOMSON DAVID [US] ET AL) 29 April 2003 (2003-04-29) * abstract; figure 2 * * column 5, line 11 - line 53 * ----- | 1-12 | |
| A | US 6 019 508 A (LIEN CHIU-FENG [TW]) 1 February 2000 (2000-02-01) * abstract; figure 4 * * column 5, line 11 - line 53 * ----- | 1-12 | |
| | -/-- | | |

The present search report has been drawn up for all claims

| Place of search | Date of completion of the search | Examiner |
|---|---|---|
| Munich | 21 December 2007 | Pisani, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 25 3276

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 225 851 B1 (DESCOMBES ARTHUR [CH]) 1 May 2001 (2001-05-01) * abstract; figures 2,3 * ----- | 1-12 | |
| | | | TECHNICAL FIELDS SEARCHED (IPC) |

The present search report has been drawn up for all claims

| Place of search | Date of completion of the search | Examiner |
|---|---|---|
| Munich | 21 December 2007 | Pisani, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 3276

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2007

| Patent document cited in search report | | Publication date | Patent family member(s) | | Publication date |
|---|---|---|---|---|---|
| US 6870357 | B1 | 22-03-2005 | US 7170275 B1 | | 30-01-2007 |
| US 2006222049 | A1 | 05-10-2006 | US 2007217479 A1 | | 20-09-2007 |
| US 6008685 | A | 28-12-1999 | US 6242974 B1 | | 05-06-2001 |
| US 6554469 | B1 | 29-04-2003 | NONE | | |
| US 6019508 | A | 01-02-2000 | SG 80573 A1 | | 22-05-2001 |
| US 6225851 | B1 | 01-05-2001 | CA 2305885 A1 | | 21-10-2000 |
| | | | SG 86389 A1 | | 19-02-2002 |
| | | | TW 446812 B | | 21-07-2001 |

EPO FORM P0459

For more details about this annex : see Official Journal of the European Patent Office, No. 12/82